# EUROPÄISCHE PATENTSCHRIFT

(11) **EP 1 250 789 B1**
(45) Veröffentlichungstag und Bekanntmachung des Hinweises auf die Patenterteilung: **19.12.2012**
(21) Anmeldenummer: 01903593.0
(22) Anmeldetag: 05.01.2001
(51) Int. Cl.: H04M 3/38, H04L 29/06, H04M 7/00

(54) **VERFAHREN, SYSTEM ZUR ÜBERMITTLUNG VON DATEN VON EINEM SENDER ZU EINEM EMPFÄNGER UND SENDER BZW. EMPFÄNGER HIERZU**
METHOD, SYSTEM FOR TRANSMITTING DATA FROM A TRANSMITTER TO A RECEIVER AND TRANSMITTER OR RECEIVER
PROCEDE ET SYSTEME DE TRANSMISSION DE DONNEES D'UN EMETTEUR VERS UN RECEPTEUR ET EMETTEUR OU RECEPTEUR A CET EFFET

(30) Priorität: 18.01.2000 DE 10001855
(43) Veröffentlichungstag der Anmeldung: 23.10.2002
(73) Patentinhaber: SIEMENS AKTIENGESELLSCHAFT, 80333 München (DE)
(72) Erfinder: EUCHNER, Martin, 81737 München (DE)
(86) Internationale Anmeldenummer: PCT/DE2001/000021
(87) Internationale Veröffentlichungsnummer: WO 2001/054371

(56) Entgegenhaltungen:
- WO-A-99/11019
- HUNT R: "Internet/Intranet firewall security-policy, architecture and transaction services" COMPUTER COMMUNICATIONS, BUTTERWORTHS & CO. PUBLISHERS LTD, GB, Bd. 21, Nr. 13, 1. September 1998 (1998-09-01), Seiten 1107-1123, XP004146571 ISSN: 0140-3664

## Beschreibung

Die Erfindung betrifft ein Verfahren und ein System und zur Übermittlung von Daten von einem Sender zu einem Empfänger und den Sender bzw. den Empfänger hierzu.

Die Übermittlung von Daten ist z.B. bekannt nach dem OSI-Referenzmodell [1]. Das OSI-Referenzmodell (kurz: OSI-Modell) der International Standards Organisation (ISO) umfaßt sieben Schichten, deren jede eine (bezogen auf die Abstraktion) unterschiedliche Funktionalität aufweist. Im OSI-Modell entspricht Schicht 1 einer Bitübertragungsschicht, dort erfolgt von Sender zu Empfänger eine Übermittlung von Daten bzw. Nachrichten anhand eines Bitübertragungsprotokolls. In Schicht 2 ist eine Sicherungsschicht vorgesehen, zur Übertragung von Schicht 2 des Senders zur Schicht 2 des Empfängers wird ein Sicherungsprotokoll verwendet. Analog werden in Schicht 3, einer Vermittlungsschicht, zwischen Sender und Empfänger ein Vermittlungsprotokoll und in Schicht 4, einer Transportschicht, ein Transportprotokoll eingesetzt. Im OSI-Modell entsprechen die Schicht 5 einer Sitzungsschicht mit einem Sitzungsprotokoll, Schicht 6 einer Darstellungsschicht mit einem Darstellungsprotokoll und Schicht 7 einer Anwendungsschicht mit einem Anwendungsprotokoll. In der Praxis ist es im Rahmen vieler Anwendungen nicht immer möglich, strenge Grenzen gerade zwischen den oberen Protokollschichten, insbesondere den Schichten 5 bis 7, exakt zu benennen. Beispielsweise im Rahmen der Internet-Telefonie, d.h. der Wahrnehmung des Telefondienstes über das Medium Internet, verschmelzen die drei Schichten oberhalb der Transportschicht 4 zu einer "Anwendungsschicht", für das analog obiger Ausführung ein "Anwendungsprotokoll" eingesetzt wird.

Eine Besonderheit des OSI-Modells und damit aller an das OSI-Modell angelehnter Kommunikationsmodelle ist es, daß durch die Unterteilung in Schichten in jeder Schicht die unteren Schichten völlig transparent zu der aktuell betrachteten Schicht Funktionen wahrnehmen und an diese obere Schicht einen Dienst erbringen, der durch die Gesamtheit der Funktionalitäten der unteren Schichten bestimmt ist. "Transparent" bedeutet in diesem Zusammenhang, daß sich die aktuell betrachtete Schicht nicht um die Funktionalitäten der unteren Schichten kümmern muß. Im hier besprochenen Fall kann also das Anwendungsprotokoll zwischen einem Sender der Anwendungsschicht und einem Empfänger der Anwendungsschicht eingesetzt werden. Darunter mögen zahlreiche Dienste, beispielsweise zur Vermittlung, zur Sicherung oder zur tatsächlichen Übertragung über einen physikalischen Kanal, liegen, um die man sich aus Sicht des Anwendungsprotokolls, insbesondere als Anwender dieses Protokolls, nicht mehr kümmern muß.

Analog zu dieser Betrachtung gibt es zwischen den einzelnen Schichten sogenannte Protokolldateneinheiten (engl.: Protocol Data Unit, PDU), die für jedes Protokoll der jeweiligen Schicht eigens ausgeführt sein können. So kann für jede Schicht in dem jeweiligen Protokoll ein eigener Header vorgesehen werden, der administrative Informationen für das Protokoll der jeweiligen Schicht enthält, wobei gemäß OSI-Modell dieser Header auch nur für die Schicht des jeweiligen Protokolls sichtbar und verwendbar ist. Details zu der Konzeption des OSI-Modells finden sich in zahlreichen Literaturstellen, unter anderem der oben genannten.

Wird nachfolgend von Anwendungsschicht gesprochen, so sind damit die Schichten oberhalb der Transportschicht (Schichten größer 4) bezeichnet. Das Anwendungsprotokoll bezeichnet ferner das Protokoll für die Kommunikation zwischen einer oberhalb der Transportschicht liegenden Anwendungsschicht eines Senders und einer oberhalb der Transportschicht angesiedelten Anwendungsschicht eines Empfängers.

Allgemein bekannt ist ein Message Authentication Code (MAC), der eine kryptographische Prüfsumme bezeichnet, anhand derer eine Veränderung in einer Nachricht bzw. in Daten erkannt werden soll (siehe [2], S.61ff.) .

Eine Einweg-Hash-Funktion ist beispielsweise aus [2], S.68ff., bekannt. Mit solch einer Einweg-Hash-Funktion ist es nicht möglich, zu einem gegebenen Funktionswert den passenden Eingabewert zu berechnen. Ein anderes Merkmal ist die Kollisionsfreiheit, d.h. es darf nicht möglich sein, zu zwei verschiedenen Eingabewerten den gleichen Ausgabewert mittels der Einweg-Hash-Funktion zu erhalten.

Ein Unterschied zwischen dem Hash-Code und dem MAC besteht darin, daß der MAC zu seiner Berechnung einen geheimen Schlüssel erfordert, wohingegen die Hash-Funktion schlüsselunabhängig und öffentlich bekannt sein kann.

Weiterhin ist ein asymmetrisches kryptographisches Verfahren (auch: Public-Key-Verfahren) bekannt, z.B. aus [2], S.73ff. Jeder Teilnehmer an einem asymmetrischen kryptographischen Verfahren erhält zwei Schlüssel, einen öffentlichen und einen geheimen Schlüssel. Grundsätzlich ist der geheime Schlüssel aus dem öffentlichen Schlüssel ableitbar, wobei diese Aufgabe so komplex wie möglich sein soll. Mit dem asymmetrischen Verfahren kann weiterhin eine elektronische Unterschrift (Authentifikation) vorgenommen und/oder der Inhalt einer Nachricht (mit dem öffentlichen Schlüssel des Empfängers) so verschlüsselt werden, daß nur der Empfänger mit seinem geheimen Schlüssel die Nachricht wieder entschlüsseln kann.

Schließlich gibt es auch ein symmetrisches Verfahren, das einen (geheimen) Schlüssel erfordert, der sowohl zur Ver- als auch Entschlüsselung eingesetzt wird. Ein Beispiel für ein symmetrisches Verschlüsselungsverfahren ist der DES-Algorithmus.

Ein Kommunikationssystem unterliegt einer Vielzahl von möglichen Angriffen, die u.a. auf den Inhalt der im Kommunikationssystem ausgetauschten Nachrichten oder auf die Verfügbarkeit des Kommunikationssystems abzielen können. Nimmt man das Beispiel der Internet-Telefonie, so ist es zum einen von Bedeutung, daß der Inhalt des Telefonats nicht von einem unberechtigten Dritten mitgehört werden kann, zum anderen ist es auch erforderlich, daß der Dritte nicht zahllose Anrufe initiieren kann und somit den Empfänger stört und das Kommunikationssystem unnötig belastet. Solche Angriffe werden auch als Denial-of-Service-Angriffe bezeichnet. Mögliche Beispiele für solche Angriffe sind Massendaten bzw. Massennachrichten, die automatisch erzeugt und zu einem oder mehreren Empfängern geschickt und dort Verfügbarkeit und Performanz in erheblichem Umfang belasten. Im Beispiel Internet-Telefonie ist es zumindest unerwünscht, daß unablässig ein Internet-Telefon klingelt und somit neben der unnötigen Netzlast auch noch die Aufmerksamkeit des Empfängers abgelenkt wird. Ebenso wird es als störend empfunden, wenn ein Angreifer durch das Senden unerlaubter Sprachdaten den Kommunikationsfluß zwischen Sender und Empfänger stört.

Zur Abwehr von Angriffen auf ein privates Kommunikationsnetz werden vielfach sogenannte "Firewalls" eingesetzt, die insbesondere eine Abgrenzung des privaten Kommunikationsnetzes von öffentlichen Netzen sicherstellen. Allerdings ist es für einen Angreifer leicht möglich, seine unsinnigen (Massen)Daten auch an Adressaten innerhalb des privaten Netzes, also hinter die Firewall, zu senden. Dort werden diese Daten decodiert und gegebenenfalls wiedergegeben. Dadurch erreicht der Angreifer, daß bspw. bei der Wiedergabe solcher unsinniger Daten nur lästige Tonstörungen oder Rauschen wahrgenommen und damit das private Netz in seiner Bandbreite und Verfügbarkeit eingeschränkt wird. Im Extremfall ist auch ein Absturz eines Teils oder des gesamten privaten Kommunikationsnetzes möglich.

Ferner ist ein RTP-Protokoll für die Übertragung von Mediendaten (sog. "Payload"), d.h. von Bild- oder Tondaten, bekannt [3].

Ein Ansatz zur Abhaltung von unerwünschten Daten liefert das IPSEC-Protokoll [5] bzw. [6]. Hier können Datenpakete des Internetprotokolls (IP-Datenpakete) eingekapselt und bezüglich Vertraulichkeit und/oder Integrität (implizite Absenderauthentifikation) geschützt werden. Ferner bietet das IPSEC-Protokoll ein Keymanagement-Verfahren mit einem sogenannten Cookie-Mechanismus (siehe [4]), anhand dessen die oben diskutierten Massendatenangriffe (Denial-of-Service-Angriffe) während der Keymanagement-Phase abgewehrt werden können. Bei dem Cookie-Mechanismus werden schnelle Einweg-Hash-Funktionen (z.B. SHA-1), Zufallszahlen und IP-Adressen miteinander verknüpft. Allerdings ist das erste "Cookie", das vom Sender zum Empfänger übertragen wird, nicht abgesichert, wodurch eine Sicherheitslücke entsteht. Ferner ist das IPSEC-Cookie-Verfahren nicht geeignet, um auf der Anwendungsschicht (für das Anwendungsprotokoll) auch unter Echtzeitbedingungen einen Schutz gegen derartige unerwünschte Massendaten zu gewährleisten. Nachteilig für IPSEC ist wegen der OSI Schichtengliederung allerdings unter anderem, daß eine Verknüpfung von IPSEC mit den Sicherheitsfunktionen einer Anwendungsschicht sich so nicht bewerkstelligen läßt.

Die **Aufgabe** der Erfindung besteht darin, Daten von einem Sender zu einem Empfänger zu übertragen, wobei bei dem Empfänger sichergestellt wird, daß es sich nicht um unerwünschte Daten, die beispielsweise von einem Denial-of-Service-Angriff herrühren, handelt.

Diese Aufgabe wird gemäß den Merkmalen der unabhängigen Patentansprüche gelöst.

Zunächst wird zur Lösung der Aufgabe ein Verfahren zur Übermittlung von Daten von einem Sender zu einem Empfänger angegeben, bei dem von dem Sender die Daten mittels eines Anwendungsprotokolls auf der Anwendungsschicht um Authentisierungsdaten erweitert werden. Anhand der Authentisierungsdaten wird von dem Empfänger ermittelt, ob er den Sender kennt. Falls der Empfänger den Sender kennt, werden die Daten entgegengenommen, ansonsten werden die Daten verworfen. Das Anwendungsprotokoll umfasst ein Realtime Transport Protocol (RTP). Die Authentisierungsdaten werden am Ende des Payloads eingefügt.

Wie oben ausgeführt, haben je nach Protokollstruktur (vgl. OSI-Modell) Daten in jeder Protokollschicht bezogen auf diese Protokollschicht ihre eigene Transparenz, d.h. die Dienste in darunterliegenden Protokollschichten werden (unsichtbar für die aktuelle Protokollschicht) wahrgenommen. Vorteilhaft sind insbesondere Datenpakete der Anwendungsschicht von den administrativen Daten darunterliegender Schichten befreit, d.h., die Datenpakete in der Anwendungsschicht weisen bis auf die administrative Information für die Anwendungsschicht lediglich die eigentlich zu kommunizierenden Daten auf. Demgemäß ist die Authentisierung in der Anwendungsschicht besonders vorteilhaft, weil die Datenpakete selbst, im Gegensatz zu darunterliegenden Schichten, eine deutlich reduzierte Größe haben. Diese geringe Größe wirkt sich vorteilhaft aus auf Echtzeit und Verfügbarkeit des gesamten Kommunikationssystems. Wenn der Empfänger den Sender kennt, d.h. insbesondere, wenn sich der Sender gegenüber dem Empfänger erfolgreich authentifiziert, wird die Nachricht des Senders entgegengenommen, insbesondere werden die Daten abgespeichert. Ansonsten, d.h. wenn der Empfänger den Sender nicht kennt, werden die Daten verworfen, d.h. eine Zwischenspeicherung entfällt. Dies ist besonders vorteilhaft, wenn eine solche Entscheidung automatisch getroffen wird. Insbesondere können auf der Anwendungsschicht vorteilhaft vorhandene Sicherheitsfunktionen und Schlüssel den einzelnen Anwendungsbenutzern zugeordnet werden. Dies läßt sich vorteilhaft in einer oben skizzierten Filterfunktion mit den Anwendungsdaten verknüpfen. Anwendungsnahe Spezialfunktionen, wie Kompressionsverfahren für Bild und/oder Ton, können vorteilhaft mit Sicherheitsfunktionen in der Anwendungsschicht kombiniert werden, wodurch sich Performance der Endsysteme steigern läßt und der Implementierungsaufwand reduziert wird; dies trifft auch auf oben genannten Filterungsmechanismus zu.

Durch den beschriebenen Authentifikationsmechanismus in der Anwendungsschicht ist es möglich, Sender und Empfänger, die einander kennen, abzugrenzen gegenüber Sendern, die vom Empfänger nicht gekannt werden und von denen der Empfänger auch keine Nachrichten entgegennimmt. Somit läßt sich ein Angriff der eingangs beschriebenen Art ("Denial-of-Service"-Angriff) wirksam verhindern, d.h. unerwünschte Massendaten werden bereits mit dem Eintreffen beim Sender verworfen.

Hierbei sei besonders angemerkt, daß es sich bei dem Empfänger keineswegs um einen Endempfänger oder Adressaten handeln muß. Vielmehr ist es möglich, daß der Empfänger selbst eine vermittelnde Instanz, z.B. ein Vermittlungsknoten oder eine Firewall mit Vermittlungsfunktionalität, ist und somit im Hinblick auf die Authentifikation des Senders für den Endempfänger handelt. So kann, bezogen auf das Beispiel "Firewall" bereits vor Eintritt in das private Kommunikationsnetzwerk eine Erzeugung von überflüssiger Netzlast durch Verwerfen der unerwünschten Massendaten unterbunden werden.

In diesem Szenario (Authentifikation in vermittelnder Instanz) ist es insbesondere von Vorteil, wenn die Authentisierungsdaten anhand eines asymmetrischen Verfahrens erzeugt werden, da somit auch von der vermittelnden Instanz, im Beispiel der Firewall, ermittelt werden kann, von wem die Daten kommen, ohne daß dazu das Geheimnis für die Entschlüsselung (wie im symmetrischen Verschlüsselungsfall) bereits in der Firewall bekannt sein muß. Die Firewall verwirft unerwünschte Massendaten, wenn ihr der Sender nicht bekannt ist; im anderen Fall, also wenn der vermittelnden Instanz der Sender bekannt ist und die Daten keinesfalls unerwünscht sind, werden diese nach Verifikation des Senders an den Empfänger weitergeleitet. Der Empfänger kann immer noch anhand seines privaten Schlüssels unabhängig von der Überprüfung der Herkunft der Daten, was bereits in der Firewall geschehen ist, die Daten entschlüsseln und lokal weiterverarbeiten (darstellen, abspeichern, etc.). Es sei nochmals betont, daß die Entschlüsselung (im Hinblick auf die Vertraulichkeit) der Daten in dem beschriebenen asymmetrischen Verfahren vom Adressaten mit Hilfe seines privaten Schlüssels durchgeführt wird, wohingegen die Herkunft der Nachricht (die für diesen Adressaten bestimmt ist) auch in der vermittelnden Instanz mit Hilfe des öffentlichen Schlüssels des Absenders - unabhängig vom Inhalt der Nachricht - überprüft werden kann. So kann eine vorgeschaltete Filterfunktionalität von der vermittelnden Instanz erfolgreich wahrgenommen werden. Somit ergibt sich eine klare funktionale Trennung der Filterfunktion gegenüber der Anwendungsfunktion; die Komplexität der Endgeräte kann dadurch vereinfacht und der Netzverkehr im privaten Kommunikationetzwerk reduziert werden.

Eine Weiterbildung besteht darin, daß die Übermittlung der Daten paketorientiert durchgeführt wird.

Eine andere Weiterbildung ist es, daß die Authentisierungsdaten bestimmt werden, indem mindestens ein Teil einer auf der Anwendungsschicht verfügbaren Protokolldateneinheit des Anwendungsprotokolls von dem Sender mit einem Geheimnis verschlüsselt wird. Dabei kann das Geheimnis zwischen Sender und Empfänger ein Schlüssel zur symmetrischen Verschlüsseln oder ein Schlüsselpaar zur asymmetrischen Verschlüsselung (Public-Key-Verfahren, siehe z.B. Beschreibung mit vermittelnder Instanz) sein. Durch das Entschlüsseln des Geheimnisses wird insbesondere auf der Seite des Empfängers bestimmt, ob der Empfänger den Sender kennt oder nicht. Dies ist vorteilhaft, wenn ohnehin auf Anwendungsebene eine Datenverschlüsselung vorhanden ist, die auch zu diesem Zweck herangezogen werden kann.

Eine Ausgestaltung besteht darin, daß die Authentisierungsdaten bestimmt werden anhand eines Teils der auf der Anwendungsschicht verfügbaren Protokolldateneinheit, insbesondere einer Sequenznummer und/oder eines Zeitstempels umfaßt.

Insbesondere ist es eine Weiterbildung, daß zur Sicherung eine Einweg-Hash-Funktion eingesetzt wird. Auch kann die Sicherung mittels eines Message Authentication Codes (MAC) erfolgen, wobei zusätzlich ein Schlüssel erforderlich ist, der nur dem Sender und dem Empfänger bekannt ist.

Eine andere Ausgestaltung besteht darin, daß vor der Übermittlung der Daten vom Sender zum Empfänger eine Authentifikation zwischen Sender und Empfänger durchgeführt wird.

Eine andere Ausgestaltung besteht darin, daß das beschriebene Verfahren in paketvermittelten Telefondiensten eingesetzt wird, insbesondere im Rahmen der Internet-Telefonie. Alternativ kann das Verfahren in Vermittlungsknoten bzw. Vermittlungsanlagen eingesetzt werden.

Eine andere Lösung der Aufgabe besteht darin, ein System zur Übermittlung von Daten anzugeben, bei dem ein Sender und ein Empfänger vorgesehen sind, wobei der Sender die Daten mittels eines Anwendungsprotokolls auf der Anwendungsschicht um Authentisierungsdaten erweitert. Der Empfänger überprüft anhand der Authentisierungsdaten, ob ihm der Sender bekannt ist. Falls dem Empfänger der Sender bekannt ist, werden die Daten des Senders verwendet, ansonsten verwirft der Empfänger die Daten des ihm unbekannten Senders. Das Anwendungsprotokoll umfasst einen Realtime Transport Protocol (RTP). Die Authentisierungsdaten werden am Ende des Payloads eingefügt.

Das System bzw. der Sender und der Empfänger sind insbesondere geeignet zur Durchführung des erfindungsgemäßen Verfahrens oder einer seiner vorstehend erläuterten Weiterbildungen.

Ausführungsbeispiele werden nachfolgend anhand der Zeichnungen dargestellt und erläutert.

Es zeigen
- Fig.1: eine Protokollarchitektur (Protokoll-Stack) eines Kommunikationssystems im Schichtenmodell;
- Fig.2: eine Anwendungsschicht mit möglichen Protokollen;
- Fig.3: ein Flußdiagramm zwischen Sender und Empfänger zur Übertragung von Daten vom Sender zum Empfänger;
- Fig.4: eine Protokolldateneinheit (PDU = Protocol Data Unit) des Anwendungsprotokolls (Schicht >5) mit Authentisierungsdaten.

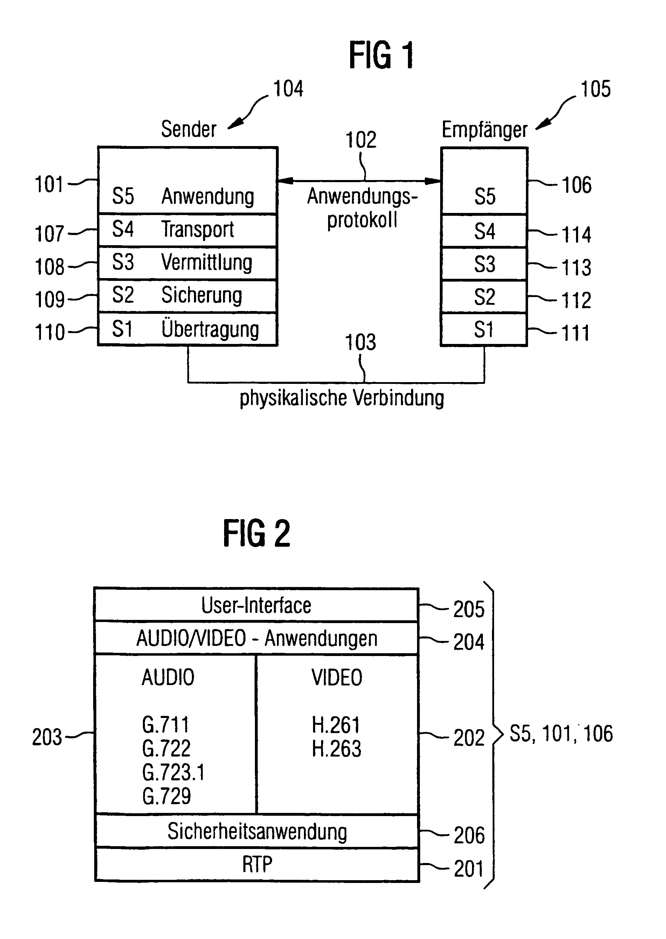

In **Fig.1** ist eine Protokollarchitektur (Protokoll-Stack) eines Kommunikationssystems im Schichtenmodell, in Anlehnung an das eingangs erwähnte OSI-Modell, dargestellt. Dazu sind ein Sender 104 und ein Empfänger 105 gezeigt, die über eine physikalische Verbindung 103 Nachrichten austauschen. Sowohl Sender 104 als auch Empfänger 105, weisen die gleiche Protokollarchitektur auf: Schicht 1 110 bzw. 111 stellt eine Übertragungsschicht, Schicht 2 109, 112 eine Sicherungsschicht, Schicht 3 108, 113 eine Vermittlungsschicht, Schicht 4 107, 114 eine Transportschicht und Schicht 5 101, 106 eine Anwendungsschicht dar. Zwischen den einzelnen Schichten existiert von Sender 104 zu Empfänger 105 jeweils ein eigenes Protokoll, bei der Anwendungsschicht 101 bzw. 106 ist dies beispielhaft das Anwendungsprotokoll 102. Von Sender 104 zu Empfänger 105 werden aus Sicht der Schicht 5 101, 106 Protokolldateneinheiten übermittelt, die das in dem Anwendungsprotokoll 102 vorgeschriebene Format haben. Die unterhalb der Anwendungsschicht liegenden Schichten stellen Funktionalitäten dar, die transparent für die Anwendungsschicht erbracht werden. Nach dem OSI-Modell sind die Funktionalitäten zweckmäßig weitgehend voneinander unabhängig gewählt.

**Fig.2** zeigt eine Anwendungsschicht mit möglichen Protokollen, bezogen auf eine Anwendung betreffend die Übertragung von Mediendaten (Audio- und Videodaten). So stellen 101 bzw. 106 die bereits aus Fig.1 bekannte Anwendungsschicht (Schicht 5) für Sender 104 und Empfänger 105 dar. Diese Anwendungsschicht ist wiederum unterteilt in mehrere Unterschichten. So gibt es unmittelbar oberhalb der Schicht 4 das Real Time Transport Protokoll (RTP) 201. Dieses Protokoll ermöglicht eine Übertragung von Sprach- und/oder Bilddaten in Echtzeit von einem zu gegebenenfalls mehreren Punkten (Adressaten). In einer Schicht 206 ist eine Sicherheitsanwendung vorgesehen, die Sicherheitsfunktionen der Anwendungsschicht zusammenfaßt; zugehörige Sicherheitsprotokolle sorgen für Dienste wie
- Benutzerauthentifikation,
- Zugangskontrolle,
- Vertraulichkeit,
- Integrität,
- Verbindlichkeit der Anwendungsdaten und
- Abrechnung.

Je nach Anwendungsfall kommen Audiodaten 203 und/oder Videodaten 202 zum Einsatz. Für beide Alternativen gibt es unterschiedliche Komprimierungsstandards, von denen beispielhaft einige in Fig.2 angeführt sind. Für die Audiodaten sind dies die Standards G.711, G.722, G.723.1 und G.729. Für die Videodaten sind das die beiden Bildkompressionsstandards H.261 und H.263. In der nächsten Abstraktionsstufe (analog zum OSI-Modell) folgen nach der Komprimierung bzw. Dekomprimierung die unterschiedlichen Möglichkeiten einer Anwendung von Audio- bzw. Videodaten (siehe Block 204). Noch eine Abstraktionsebene darüber befindet sich beispielsweise ein User-Interface 205, das für einen Benutzer völlig transparent die darunterliegenden und eben beschriebenen Dienste zur Verfügung stellt. Beispielsweise kann somit ein Benutzer, unter Berücksichtigung sowohl der Audio- als auch der Video-Daten eine Bild-Telefonie, z.B. über das Internet, wahrnehmen, wobei er sich im einzelnen um keinerlei Details der Dienste, die die darunterliegenden Schichten erbringen, Gedanken machen muß. Er nutzt somit den für ihn sichtbaren Dienst der Bild-Telefonie über das Internet transparent. Dabei können unterhalb seines Dienstes verschiedene alternative Implementierungsformen liegen.

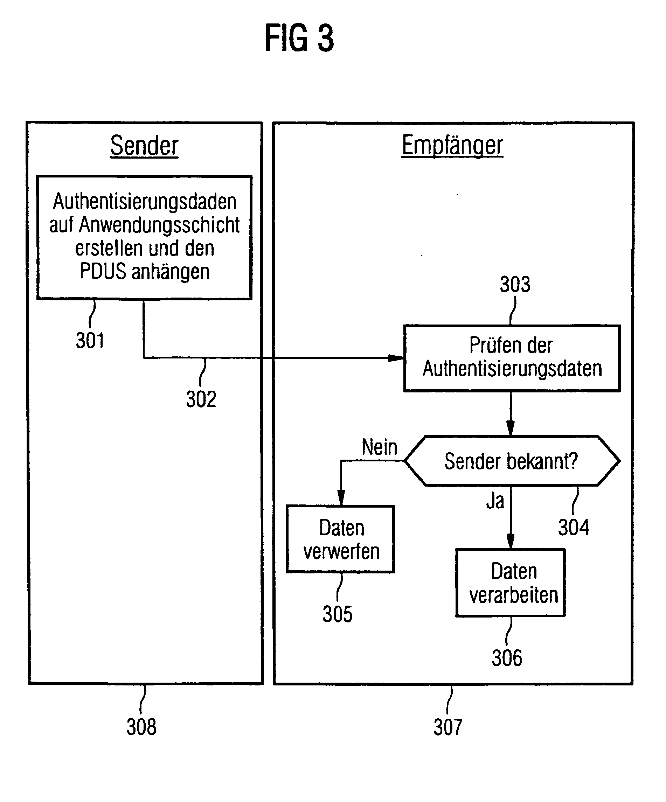

**Fig.3** zeigt ein Flußdiagramm zwischen Sender und Empfänger zur Übertragung von Daten von dem Sender 308 zu dem Empfänger 307. In einem Schritt 301 werden Authentisierungsdaten auf der Anwendungsschicht erstellt und der für das Anwendungsprotokoll relevanten Protokolldateneinheit (PDU) angehängt. Gemäß den Vereinbarungen des Anwendungsprotokolls werden die Daten einschließlich der Authentisierungsdaten an den Empfänger 307 übermittelt (siehe Verbindung 302). Dies geschieht unter Wahrnehmung der unter dem Anwendungsprotokoll verfügbaren Funktionalitäten bzw. Dienste. In einem Block 303 werden bei dem Empfänger 307 die Authentisierungsdaten geprüft und abgefragt (in einem Block 304), ob der Sender 308 dem Empfänger 307 bekannt ist. Ist dies nicht der Fall, so wird zu einem Block, 305 verzweigt und die Daten werden verworfen. In dem Fall, in dem der Sender 308 dem Empfänger 307 bekannt ist, wird zu einem Block 306 verzweigt und die Daten werden weiter verarbeitet. Die Authentifikation zwischen Sender und Empfänger war erfolgreich, bei den übermittelten Daten handelt es sich nicht um unerwünschte Massendaten.

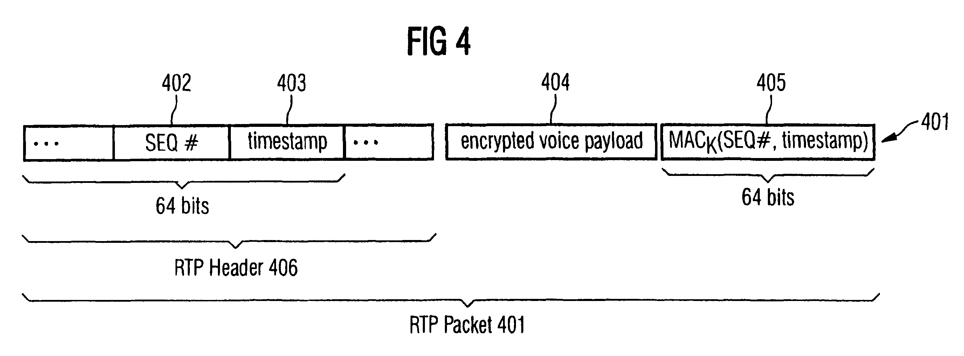

**Fig.4** zeigt eine Protokolldateneinheit (PDU) des Anwendungsprotokolls mit Authentisierungsdaten. Dargestellt ist in Fig.4 eine Protokolldateneinheit (PDU) des Real Time Transport Protokolls (RTP, siehe 201 in Fig.2) 401. Ein solches RTP-Paket 401 umfaßt einen RTP-Header 406, verschlüsselte Mediendaten 404 und Authentisierungsdaten 405. Der RTP-Header 406 umfaßt unter anderem eine Sequenznummer 402 und einen Zeitstempel 403. Sowohl dem Sender als auch dem Empfänger ist ein gemeinsames Geheimnis K bekannt, hier angedeutet als ein Schlüssel, anhand dessen ein Message Authentication Code (MAC), abhängig von der Sequenznummer 402 und dem Zeitstempel 403 erzeugt wird (siehe Feld 405). Vorteilhaft ist im Hinblick auf die Verschlüsselung beispielsweise mittels DES-Algorithmus eine Feldlänge von 64 Bit.

Wie bereits beschrieben, wird ein solches vom Sender abgesandtes Paket auf Seiten des Empfängers derart authentifiziert, daß (bezogen auf die Anwendungsschicht) abhängig von dem beim Empfänger bekannten Schlüssel (K) ein Message Authentication Code von Feld 402 (Sequenznummer) und Feld 403 (Zeitstempel) erzeugt wird. Ist dieser Message Authentication Code gleich dem Feld 405, so handelt es sich bei dem angekommenen RTP-Paket 401 um ein von einem bekannten Sender stammendes Datenpaket, die Daten werden verarbeitet, beispielsweise dargestellt oder abgespeichert. Im anderen Fall handelt es sich um nicht authentifizierte Daten, der Sender ist dem Empfänger unbekannt und das gesamte RTP-Paket wird verworfen.

### Literaturverzeichnis:

[1] Andrew S. Tanenbaum: Computer-Netzwerke; Wolfram's Fachverlag; Attenkirchen 1992; ISBN 3-925328-79-3; Seiten 17-32.
[2] Christoph Ruland: Informationssicherheit in Datennetzen; DATACOM-Verlag; Bergheim 1993; ISBN 3-89238-081-3; Seiten 61-63 und 68-79.
[3] [RFC1889] H. Schulzrinne: RTP: A Transport Protocol for Real-Time Applications; Internet Engineering Task Force, 1996.
[4] [RFC2409] The Internet Key Exchange (IKE), D. Harkins, D. Carrel, ; Internet Engineering Task Force, 1998.
[5] [RFC2402] IP Authentication Header, S. Kent, R. Atkinson; Internet Engineering Task Force, 1998.
[6] [RFC2406] IP Encapsulating Security Payload (ESP), S. Kent, R. Atkinson; Internet Engineering Task Force, 1998.

## Patentansprüche

1. Verfahren zur Übermittlung von Daten von einem Sender zu einem Empfänger,
a) bei dem von dem Sender die Daten mittels eines Anwendungsprotokolls auf der Anwendungsschicht um Authentisierungsdaten erweitert werden,
b) bei dem anhand der Authentisierungsdaten von dem Empfänger ermittelt wird, ob er den Sender kennt,
c) bei dem, falls der Empfänger den Sender kennt, die Daten entgegengenommen werden, ansonsten werden die Daten verworfen,
d) bei dem das Anwendungsprotokoll ein Real Time Transport Protocol (RTP) umfasst,
e) bei dem die Authentisierungsdaten am Ende des Payload eingefügt werden.

2. Verfahren nach Anspruch 1,
bei dem die Paket-Ende-Information durch eine Paket-Längenangabe im jeweiligen Paket-Header erfolgt.

3. Verfahren nach einem der vorhergehenden Ansprüche,
bei dem die Authentisierungsdaten bestimmt werden, indem mindestens ein Teil einer auf der Anwendungsschicht verfügbaren Protokolldateneinheit des Anwendungsprotokolls von dem Sender mit einem Geheimnis verknüpft wird.

4. Verfahren nach Anspruch 3,
bei dem die Verknüpfung mit dem Geheimnis durch
a) eine kryptographische Verknüpfung mit mindestens einem weiteren Parameter, insbesondere eine Verschlüsselungsoperation und/oder
b) eine kryptographischen Prüfsumme und Schlüsselinformation
durchgeführt wird.

5. Verfahren nach einem der vorhergehenden Ansprüche, bei dem durch eine Verifikation auf der Seite des Empfängers bestimmt wird, ob der Empfänger den Sender kennt oder nicht.

6. Verfahren nach Anspruch 5,
bei dem die Verifikation in Form einer kryptographischen Verifikation mit weiteren Parametern, insbesondere einer Entschlüsselungsoperation und/oder einer kryptographischen Prüfsummenüberprüfung durchgeführt wird.

7. Verfahren nach einem der Ansprüche 3 bis 6,
bei dem das Geheimnis zwischen Sender und Empfänger ein Schlüssel zur symmetrischen Verschlüsselung oder ein Schlüsselpaar zur asymmetrischen Verschlüsselung ist.

8. Verfahren nach einem der Ansprüche 3 bis 7,
bei dem der Teil der auf der Anwendungsschicht verfügbaren Protokolldateneinheit eine Sequenznummer und/oder einen Zeitstempel umfaßt.

9. Verfahren nach einem der Ansprüche 3 bis 8,
bei dem zur Verschlüsselung eine Einweg-Hash-Funktion oder ein Message-Authentication-Code mit einem Schlüssel, der nur Empfänger und zu authentifizierendem Sender bekannt ist, eingesetzt wird.

10. Verfahren nach einem der vorhergehenden Ansprüche,
bei dem vor der Übermittlung der Daten vom Sender zum Empfänger eine Authentifikation zwischen Sender und Empfänger durchgeführt wird.

11. Verfahren nach einem der vorhergehenden Ansprüche zum Einsatz in paketvermittelten Telefondiensten.

12. Verfahren nach Anspruch 11
eingesetzt in der Internet-Telefonie.

13. Verfahren nach einem der vorhergehenden Ansprüche eingesetzt in Vermittlungsknoten bzw. Vermittlungsanlagen.

14. System zur Übermittlung von Daten, bei dem ein Sender und ein Empfänger vorgesehen sind,
a) bei dem der Sender die Daten mittels eines Anwendungsprotokolls auf der Anwendungsschicht um Authentisierungsdaten erweitert,
b) bei dem der Empfänger anhand der Authentisierungsdaten bestimmt, ob ihm der Sender bekannt ist,
c) bei dem, falls der Empfänger den Sender kennt, der Empfänger die Daten verwendet, ansonsten verwirft er die Daten,
d) bei dem das Anwendungsprotokoll ein Real Time Transport Protocol (RTP) umfasst,
e) bei dem die Authentisierungsdaten am Ende des Payload eingefügt werden.

## Claims

1. Method for transmitting data from a transmitter to a receiver,
a) in which the transmitter extends the data by authentication data using an application protocol on the application layer,
b) in which the authentication data are used by the receiver to ascertain whether it knows the transmitter,
c) in which, if the receiver knows the transmitter, the data are accepted, otherwise the data are rejected,
d) in which the application protocol comprises a real time transport protocol (RTP),
e) in which the authentication data are inserted at the end of the payload.

2. Method according to Claim 1,
in which the packet-end information is provided by a packet-length statement in the respective packet header.

3. Method according to one of the preceding claims,
in which the authentication data are determined by virtue of at least part of a protocol data unit, available on the application layer, of the application protocol being linked to a secret by the transmitter.

4. Method according to Claim 3,
in which the linking to the secret is carried out by virtue of
a) cryptographical linking to at least one further parameter, particularly by virtue of an encryption operation and/or
b) a cryptographic checksum and key information.

5. Method according to one of the preceding claims,
in which verification at the receiver end determines whether or not the receiver knows the transmitter.

6. Method according to Claim 5,
in which the verification is carried out in the form of cryptographic verification using further parameters, particularly a decryption operation and/or a cryptographic checksum check.

7. Method according to one of Claims 3 to 6,
in which the secret between the transmitter and the receiver is a key for symmetric encryption or a key pair for asymmetric encryption.

8. Method according to one of Claims 3 to 7,
in which the part of the protocol data unit available on the application layer comprises a sequence number and/or a timestamp.

9. Method according to one of Claims 3 to 8,
in which the encryption is performed using a one-way hash function or a message authentication code with a key which is known only to the receiver and to the transmitter which is to be authenticated.

10. Method according to one of the preceding claims,
in which, before the data are transmitted from the transmitter to the receiver, authentication is carried out between the transmitter and the receiver.

11. Method according to one of the preceding claims for use in packet-switched telephone services.

12. Method according to Claim 11,
used in Internet telephony.

13. Method according to one of the preceding claims,
used in switching nodes and switching installations.

14. System for transmitting data, in which a transmitter and a receiver are provided
a) in which the transmitter extends the data by authentication data using an application protocol on the application layer,
b) in which the receiver uses the authentication data to determine whether it knows the transmitter,
c) in which, if the receiver knows the transmitter, the receiver uses the data, otherwise it rejects the data,
d) in which the application protocol comprises a real time transport protocol (RTP),
e) in which the authentication data are inserted at the end of the payload.

## Revendications

1. Procédé de transmission de données d'un émetteur vers un récepteur, dans lequel :
a) l'émetteur élargit les données par des données d'authentification au moyen d'un protocole d'application sur la couche d'application ;
b) le récepteur établit, à l'aide des données d'authentification, s'il connaît l'émetteur ;
c) si le récepteur connaît l'émetteur, les données sont acceptées, les données étant rejetées dans le cas contraire ;
d) le protocole d'application inclut un protocole de transport en temps réel (RTP) ;
e) les données d'authentification sont insérées à la fin des données utiles (Payload).

2. Procédé selon la revendication 1, dans lequel l'information de fin de paquet est effectuée par une indication de longueur de paquet dans l'en-tête de paquet respectif.

3. Procédé selon l'une des revendications précédentes, dans lequel les données d'authentifications sont déterminées par association à un secret, par l'émetteur, d'au moins une partie d'une unité, disponible sur la couche d'application, de données de protocole du protocole d'application.

4. Procédé selon la revendication 3, dans lequel l'association à un secret est effectuée par :
a) une association cryptographique à au moins un autre paramètre, en particulier une opération de cryptage, et/ou
b) une somme de contrôle cryptographique et une information de clé.

5. Procédé selon l'une des revendications précédentes, dans lequel une vérification du côté du récepteur permet d'établir si le récepteur connaît ou non l'émetteur.

6. Procédé selon la revendication 5, dans lequel la vérification est effectuée sous la forme d'une vérification cryptographique avec d'autres paramètres, en particulier d'une opération de décryptage et/ou d'une vérification cryptographique de la somme de contrôle.

7. Procédé selon l'une des revendications 3 à 6, dans lequel le secret entre l'émetteur et le récepteur est une clé pour le cryptage symétrique ou une paire de clés pour le cryptage asymétrique.

8. Procédé selon l'une des revendications 3 à 7, dans lequel la partie de l'unité de données de protocole disponible sur la couche d'application comprend un numéro de séquence et/ou un horodateur.

9. Procédé selon l'une des revendications 3 à 8, dans lequel sont utilisés, pour le cryptage, une fonction de hachage unidirectionnelle ou un code d'authentification de message avec une clé qui est connue uniquement du récepteur et de l'émetteur à authentifier.

10. Procédé selon l'une des revendications précédentes, dans lequel une authentification est effectuée entre l'émetteur et le récepteur avant la transmission des données de l'émetteur vers le récepteur.

11. Procédé selon l'une des revendications précédentes, destiné à être mis en oeuvre dans des services téléphoniques à commutation de paquets.

12. Procédé selon la revendication 11, mis en oeuvre dans la téléphonie internet.

13. Procédé selon l'une des revendications précédentes, mis en oeuvre dans des noeuds de commutation ou des installations de commutation.

14. Système de transmission de données, dans lequel sont prévus un émetteur et un récepteur, dans lequel :
a) l'émetteur élargit les données par des données d'authentification au moyen d'un protocole d'application sur la couche d'application ;
b) le récepteur établit, à l'aide des données d'authentification, s'il connaît l'émetteur ;
c) si le récepteur connaît l'émetteur, le récepteur utilise les données et les rejette dans le cas contraire ;
d) le protocole d'application inclut un protocole de transport en temps réel (RTP) ;
e) les données d'authentification sont insérées à la fin des données utiles(Payload).
